# EUROPEAN PATENT APPLICATION

(11) **EP 2 849 488 A1**
(43) Date of publication of application: **18.03.2015**
(21) Application number: 12876381.0
(22) Date of filing: 10.05.2012
(51) Int. Cl.: H04W 28/18

(54) **MOBILE SETTING NEGOTIATION METHOD AND DEVICE**

(71) Applicant: Fujitsu Limited, Kawasaki-shi, Kanagawa 211-8588 (JP)
(72) Inventor: WANG, Weiwei, Beijing 100025 (CN); LI, Zhaojun, Beijing 100025 (CN); ZHOU, Hua, Beijing 100025 (CN)
(74) Representative: Cooper-Rolfe, Elizabeth Louise
(86) International application number: PCT/CN2012/075275
(87) International publication number: WO 2013/166678

(57) **Abstract**

Embodiments of the present invention provide a method and apparatus for negotiating mobility settings. In transmitting a request message for mobility change by a transmitting eNB for negotiating mobility settings to a receiving eNB, identification of handover triggers (one or more) needing to negotiate mobility settings is added; and after receiving the request message for mobility change, the receiving eNB may determine which handover trigger or handover triggers need to negotiate mobility settings according to the identification of the handover triggers, determine whether the process of negotiating mobility settings of the handover triggers can be completed (that is, whether the parameter settings of the one or more handover triggers can be accepted) according to information on parameter settings included in the request message for mobility change, and feed corresponding acknowledgement message of mobility change or failure message of mobility change back to the transmitting eNB, thereby achieving inter-eNB load balance and optimization of handover performance.

## Description

### Technical Field

The present invention relates to the field of communications, and in particular to a method and apparatus for negotiating mobility settings.

### Background Art

In an LTE-A (long-term evolution-advanced) system, mobility settings change will be negotiated between eNBs. A request message for mobility change is transmitted by a transmitting eNB to a receiving eNB, the message including such information as parameter settings of a handover trigger of the transmitting eNB, and parameter settings of the handover trigger recommended to the receiving eNB, etc. After receiving the request message, the receiving eNB decides whether to accept the recommended parameter settings in conjunction with the performance of itself; and if it accepts, it will respond an acknowledgment message of mobility change; otherwise, it will respond a failure message of mobility change. Optionally, an acceptable range of parameter of the handover trigger may also be given. With such a process of negotiation, inter-eNB load balance and optimization of handover performance may be achieved.

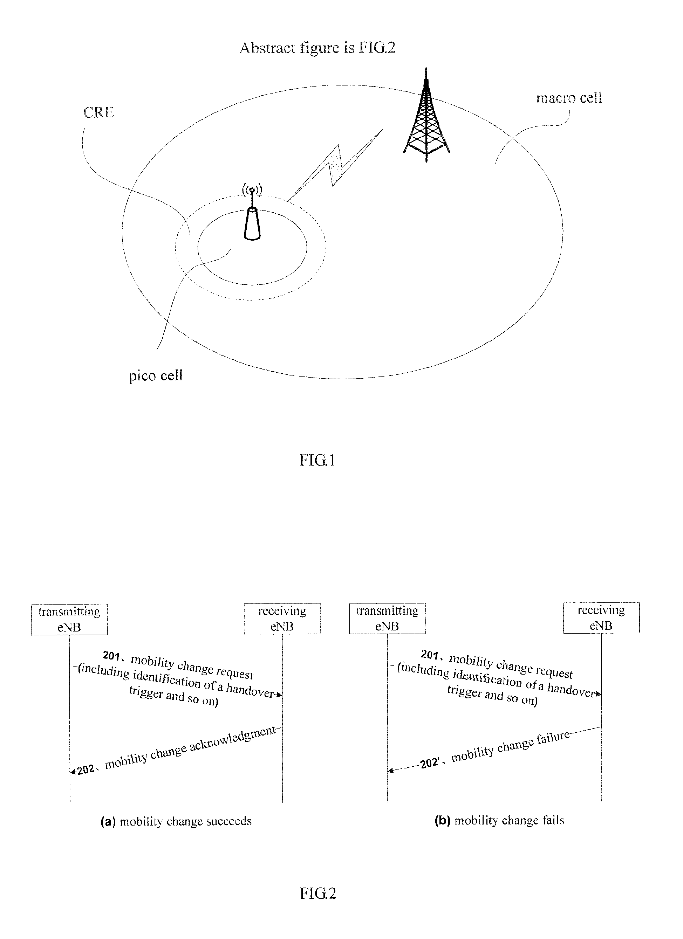

However, in the implementation of the present invention, it was found by the inventors that in an existing solution, a negotiation process of a mobility settings change can only be used for negotiation adjustment of parameters of one handover trigger. And when there exist a plurality of handover triggers in one cell, an eNB (a receiving eNB) receiving a request message for mobility change cannot determine which handover trigger is adjusted. As shown in Figure 1, in the heterogeneous network scenario, the pico cell includes, besides a coverage area of its own, a resource extension area (CRE); at this moment, corresponding to each area, the base station of the pico cell has one handover trigger, when it negotiates a mobility settings change with a macro eNB, it will transmit a request message for mobility change to the macro eNB; and after receiving the message for mobility change, the macro eNB cannot determine which of the handover triggers shall be adjusted with respect to parameters by the base station of the pico cell. How to solve such a problem is a further orientation of study in this field.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

An object of the embodiments of the present invention is to provide a method and apparatus for negotiating mobility settings; wherein in a negotiation process of a mobility settings change, a handover trigger needing to be adjusted is indicated by identification of the handover trigger, so as to achieve inter-eNB load balance and optimization of handover performance.

According to an aspect of the embodiments of the present invention, there is provided a method for negotiating mobility settings, including:
transmitting a request message for mobility change by a transmitting eNB for negotiating mobility settings to a receiving eNB, the request message for mobility change including identification of at least one handover trigger, so that the receiving eNB negotiates mobility settings with respect to the at least one handover trigger with the transmitting eNB according to the identification of the at least one handover trigger.

According to an aspect of the embodiments of the present invention, there is provided a method for negotiating mobility settings, including:
receiving, by a receiving eNB for negotiating mobility settings, a request message for mobility change transmitted by a transmitting eNB, the request message for mobility change including identification of at least one handover trigger; and
negotiating mobility settings with respect to the at least one handover trigger by the receiving eNB with the transmitting eNB according to the identification of the at least one handover trigger.

According to an embodiments of the present invention, there is provided a transmitting eNB for negotiating mobility settings, including:
a transmitting unit configured to transmit a request message for mobility change to a receiving eNB, the request message for mobility change including identification of at least one handover trigger, so that the receiving eNB negotiates mobility settings with respect to the at least one handover trigger with the transmitting eNB according to the identification of the at least one handover trigger.

According to an embodiments of the present invention, there is provided a receiving eNB for negotiating mobility settings, including:
a receiving unit configured to receive a request message for mobility change transmitted by a transmitting eNB, the request message for mobility change including identification of at least one handover trigger; and
a negotiating unit configured to negotiate mobility settings with respect to the at least one handover trigger with the transmitting eNB according to the identification of the at least one handover trigger.

An advantage of the embodiments of the present invention resides in that with the method and apparatus of the embodiments of the present invention, in a negotiation process of a mobility settings change, a handover trigger needing to be adjusted is indicated by identification of the handover trigger, so as to achieve inter-eNB load balance and optimization of handover performance.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

In the drawings:
Figure 1 is a schematic diagram of a heterogeneous network scenario;
Figures 2a and 2b are flowcharts of a method for negotiating mobility settings provided in an embodiment of the present invention;
Figure 3 is a flowchart of a method for negotiating mobility settings provided in another embodiment of the present invention;
Figure 4 is a concrete flowchart of performing mobility settings negotiation in Figure 3;
Figure 5 is a schematic diagram of the structure of a transmitting eNB for negotiating mobility settings provided in an embodiment of the present invention; and
Figure 6 is a schematic diagram of the structure of a receiving eNB for negotiating mobility settings provided in an embodiment of the present invention.

### Detailed Description of the Invention

Foregoing and other features of the embodiments of the present invention will become apparent with reference to the drawings and the following description. These embodiments are illustrative only, and are not intended to limit the present invention. For the principle and implementation modes of the present invention to be easily understood by those skilled in the art, the implementation modes of the present invention shall be described taking negotiation of an inter-eNB mobility settings change in an LTE-A system as an example. However, it should be understood that the embodiments of the present invention are not limited to the above system, and are applicable to other systems related to a negotiation of an inter-eNB mobility settings change.

### Embodiment 1

An embodiment of the present invention provides a method for negotiating mobility settings, applicable to a transmitting eNB for negotiating mobility settings. Figs. 2a and 2b are flowcharts of the method. Referring to Figs. 2a and 2b, the method includes:
step 201: transmitting a request message for mobility change by a transmitting eNB for negotiating mobility settings to a receiving eNB, the request message for mobility change including identification of at least one handover trigger, so that the receiving eNB negotiates mobility settings with respect to the at least one handover trigger with the transmitting eNB according to the identification of the at least one handover trigger.

In this embodiment, the identification of the handover trigger included in the request message for mobility change is used to indicate a type of a handover trigger needing to negotiate mobility settings. For example, the type may be: a handover trigger for cell range extension area; a handover trigger for non-cell range extension area; a handover trigger for high-speed/medium-speed/low-speed user; or a handover trigger for high service quality user. Such types are examples only, and the embodiment of the present invention is not limited thereto.

In this embodiment, the handover trigger needing to negotiate mobility settings is indicated by adding the identification of the handover trigger into the request message for mobility change, which may assist in determining the type of the handover trigger negotiating mobility settings by the receiving eNB and achieving inter-eNB load balance and optimization of handover performance. Wherein, an existing means may be used as a concrete manner of negotiating mobility settings, and the embodiment of the present invention is not limited thereto.

In this embodiment, the request message for mobility change may include identification of one handover trigger, indicating that it is needed to perform mobility settings negotiation to the one handover trigger; and the request message for mobility change may include identification of a plurality of handover triggers, indicating that it is needed to perform mobility settings negotiation to the plurality of handover triggers.

In this embodiment, the identification of the at least on handover trigger may be identification of the at least one handover trigger in the transmitting eNB, or identification of the at least one handover trigger in the receiving eNB, or identification of the at least one handover trigger in the transmitting eNB and in the receiving eNB, respectively. However, the embodiment of the present invention is not limited thereto.

For example, assuming that mobility settings negotiation is performed to handover triggers A, B and C, and identification of the handover triggers A, B and C in the transmitting eNB are A_{T}, B_{T} and C_{T}, respectively, and identification of them in the receiving eNB are A_{R}, B_{R} and C_{R}, respectively, according to the method of this embodiment, A_{T}, B_{T} and C_{T}, may only be included in the request message for mobility change transmitted by the transmitting eNB, or A_{R}, B_{R} and C_{R}, may only be included in the request message for mobility change transmitted by the transmitting eNB, or A_{T}, B_{T} and C_{T} and A_{R}, B_{R} and C_{R} may be included in the request message for mobility change transmitted by the transmitting eNB. It can be seen that when the request message for mobility change includes the identification of the handover triggers in the transmitting eNB and the identification of them in the receiving eNB at the same time, the handover trigger has implied one-to-one corresponding relationship between in the transmitting eNB and in the receiving eNB; that is, identification of the same handover trigger in the transmitting eNB and in the receiving eNB is different. Therefore, the receiving eNB may be assisted in determining the identification of the handover trigger needing to negotiate mobility settings in itself (in the receiving eNB), so that corresponding mobility settings negotiation is performed.

In this embodiment, the indicating method of the identification of the handover triggers and the position of the identification of the handover triggers in the request message for mobility change are not limited. In concrete implementation, corresponding settings may be performed according to a policy of resource allocation.

With the method of this embodiment, the receiving eNB may determine which one or more handover triggers need to be performed mobility settings negotiation according to the identification of the at least one handover trigger, and complete a process of mobility settings negotiation of a corresponding handover trigger according to other information included in the request message for mobility change.

In an embodiment, the request message for mobility change further includes: parameter settings of each handover trigger corresponding to the identification of the at least one handover trigger.

Wherein the parameter settings may be parameter settings of the handover trigger in the transmitting eNB, and may also be parameter settings of the handover trigger in the receiving eNB recommended by the transmitting eNB to the receiving eNB; and may also include parameter settings of the handover trigger in the transmitting eNB and parameter settings of the handover trigger in the receiving eNB recommended by the transmitting eNB to the receiving eNB.

Wherein, after receiving the above information on the parameter settings, the receiving eNB may determine whether it can complete the process of negotiating mobility settings in conjunction with the performance of itself; if yes, the receiving eNB feeds an acknowledgement message of mobility change back to the transmitting eNB, as shown in step 202; and if no, such as parameter settings of the handover triggers in the receiving eNB recommended by the transmitting eNB cannot be accepted, or a part of the parameter settings of the handover triggers in the receiving eNB recommended by the transmitting eNB can only be accepted, the receiving eNB feeds a failure message of mobility change back to the transmitting eNB, as shown in step 202'.

For example, assuming that the request message for mobility change transmitted by the transmitting eNB to the receiving eNB includes the identification of the handover triggers A, B and C and parameter settings of the handover triggers A, B and C in the transmitting eNB corresponding to the identification of the handover triggers A, B and C, if the receiving eNB, after receiving the request message for mobility change, in conjunction with the performance of itself, finds that the process of negotiating mobility settings can be completed according to the parameter settings, it feeds the acknowledgement message of mobility change back to the transmitting eNB; on the contrary, if the receiving eNB finds that the process of negotiating mobility settings cannot be completed according to the parameter settings, such as the parameter settings of the handover trigger A, B or C in its transmitting eNB cannot be accepted, it feeds the failure message of mobility change back to the transmitting eNB.

For another example, assuming that the request message for mobility change transmitted by the transmitting eNB to the receiving eNB includes the identification of the handover triggers A, B and C and parameter settings of the handover triggers A, B and C in the receiving eNB corresponding to the identification of the handover triggers A, B and C recommended by the transmitting eNB to the receiving eNB, if the receiving eNB, after receiving the request message for mobility change, in conjunction with the performance of itself, finds that the process of negotiating mobility settings can be completed according to the recommended parameter settings, it feeds the acknowledgement message of mobility change back to the transmitting eNB; on the contrary, if the receiving eNB finds that the process of negotiating mobility settings cannot be completed according to the parameter settings, such as the recommended parameter settings of the handover trigger A, B or C in the receiving eNB cannot be accepted, it feeds the failure message of mobility change back to the transmitting eNB.

For a further example, assuming that the request message for mobility change transmitted by the transmitting eNB to the receiving eNB includes the identification of the handover triggers A, B and C, parameter settings of the handover triggers A, B and C in the transmitting eNB corresponding to the identification of the handover triggers A, B and C and parameter settings of the handover triggers A, B and C in the receiving eNB corresponding to the identification of the handover triggers A, B and C recommended by the transmitting eNB to the receiving eNB, if the receiving eNB, after receiving the request message for mobility change, in conjunction with the performance of itself, finds that the process of negotiating mobility settings can be completed according to the recommended parameter settings, it feeds the acknowledgement message of mobility change back to the transmitting eNB; on the contrary, if the receiving eNB finds that the process of negotiating mobility settings cannot be completed according to the recommended parameter settings, such as the recommended parameter settings of the handover trigger A, B or C in the receiving eNB cannot be accepted, it feeds the failure message of mobility change back to the transmitting eNB.

In the above examples, taking that the types of the parameter settings included in the request message for mobility change are identical as examples. However, this embodiment is not limited thereto, and parameter settings corresponding to different identification of handover triggers in the request message for mobility change may be of different types.

For example, in the request message for mobility change transmitted by the transmitting eNB to the receiving eNB, identification of the handover triggers A, B and C may be included, and at the same time, the parameter settings of the handover trigger A in the transmitting eNB corresponding to the identification of the handover trigger A, the parameter settings of the handover trigger B in the receiving eNB recommended by the transmitting eNB to the receiving eNB corresponding to the identification of the handover trigger B, the parameter settings of the handover trigger C in the transmitting eNB and the parameter settings of the handover trigger C in the receiving eNB recommended by the transmitting eNB to the receiving eNB corresponding to the identification of the handover trigger C, may also be included. At this moment, the receiving eNB may judge whether the process of negotiating mobility settings can be completed according to an existing means after receiving such a request message for mobility change.

In the above examples, the types of the identification of the handover triggers A, B and C are not limited, and as described above, it may be identification of the handover triggers A, B and C in the transmitting eNB, and may also be identification of the handover triggers A, B and C in the transmitting eNB and in the receiving eNB, respectively; and this embodiment is not limited thereto.

In this embodiment, the parameter settings of the handover triggers in the transmitting eNB may be absolute values, such as corresponding parameters and/or parameter ranges, and may also be relative values, such as a value relative to a conventional value, this embodiment is not limited thereto, and all the values indicating the parameter settings are covered by the protection scope of the present invention. Likewise, the parameter settings of the handover triggers in the receiving eNB recommended by the transmitting eNB to the receiving eNB may also be absolute values or relative values, the absolute values being definite parameters and/or parameter ranges, and the relative values being values taking a certain value as a reference.

In another embodiment, the request message for mobility change may further include: parameter change reason of each handover trigger corresponding to the identification of the at least one handover trigger. The parameter change reason may be taken as auxiliary information for the receiving eNB for judging whether the parameter settings of the handover triggers in the receiving eNB recommended by the transmitting eNB can be accepted.

Wherein if the parameter change reasons corresponding to each of the handover triggers are identical, in this embodiment, the request message for mobility change may include only one parameter change reason.

Taking the above description as an example, if the parameter change reasons of the handover triggers A, B and C are identical, the request message for mobility change includes only one parameter change reason, thereby saving resources.

With the method of the embodiment of the present invention, in transmitting a request message for mobility change by a transmitting eNB for negotiating mobility settings to a receiving eNB, identification of handover triggers (one or more) needing to negotiate mobility settings is added; and after receiving the request message for mobility change, the receiving eNB may determine which handover trigger or handover triggers need to negotiate mobility settings according to the identification of the handover triggers, determine whether the mobility settings negotiation of the one or more handover triggers can be completed, such as whether the parameter change of the one or more handover triggers can be accepted, according to other information included in the request message for mobility change, and feed a corresponding acknowledgement message of mobility change or failure message of mobility change back to the transmitting eNB, thereby achieving inter-eNB load balance and optimization of handover performance. In particular, processing of the receiving eNB shall be described in the embodiment as below.

### Embodiment 2

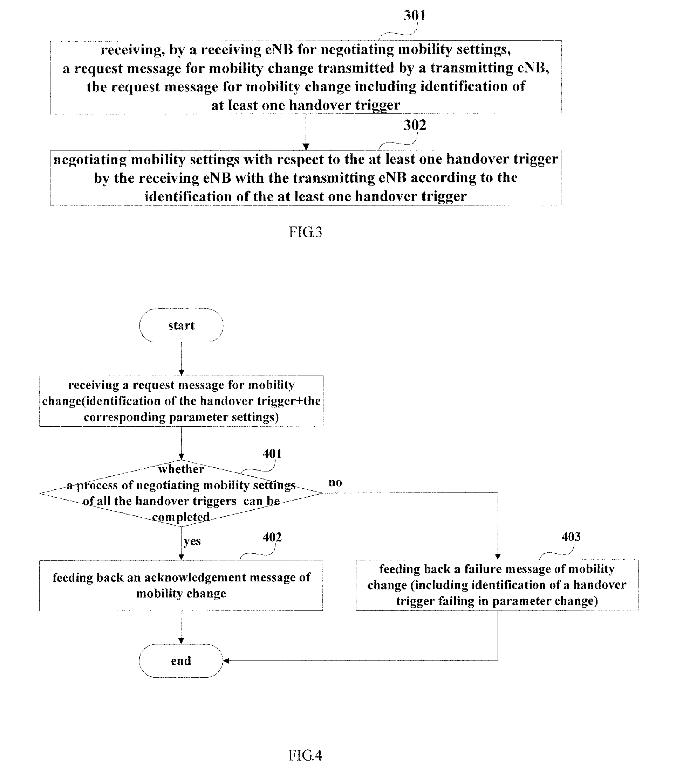

An embodiment of the present invention provides a method for negotiating mobility settings, applicable to a receiving eNB for negotiating mobility settings. Fig. 3 is a flowchart of the method. Referring to Fig. 3, the method includes:
step 301: receiving, by a receiving eNB for negotiating mobility settings, a request message for mobility change transmitted by a transmitting eNB, the request message for mobility change including identification of at least one handover trigger; and
step 302: negotiating mobility settings with respect to the at least one handover trigger by the receiving eNB with the transmitting eNB according to the identification of the at least one handover trigger.

In an embodiment, the request message for mobility change further includes parameter settings of each handover trigger corresponding to the identification of the at least one handover trigger; hence, step 302 may be carried out by a method shown in Fig. 4. Referring to Fig. 4, the method includes:
step 401: determining, by the receiving eNB according to the parameter settings, whether a process of negotiating mobility settings of all the handover triggers corresponding to the identification of the at least one handover trigger can be completed; and if yes, executing step 402; otherwise, executing step 403;
step 402: feeding an acknowledgement message of mobility change by the receiving eNB back to the transmitting eNB;
step 403: feeding a failure message of mobility change by the receiving eNB back to the transmitting eNB, the failure message of mobility change including identification of a handover trigger failing in parameter change.

Wherein, step 401 is used to judge whether parameter settings of each handover trigger corresponding to the identification of the at least one handover trigger can be accepted, determine that the process of negotiating mobility settings can be completed if the parameter settings of each handover trigger can be accepted, and determine that the process of negotiating mobility settings cannot be completed if the parameter settings of each handover trigger cannot be accepted or only a part of the parameter settings of the handover triggers can be accepted, and the receiving eNB feeds the failure message of mobility change back to the transmitting eNB, the failure message of mobility change including the identification of the handover trigger (the handover trigger which cannot accept the parameter settings) failing in parameter change, as shown in Fig. 2b.

For example, it is assumed that the request message for mobility change transmitted by the transmitting eNB includes the identification of the handover trigger A and the handover trigger B, the parameter settings of the handover trigger A corresponding to the identification of the handover trigger A and the parameter settings of the handover trigger B corresponding to the identification of the handover trigger B. The parameter settings here may be the parameter settings of the handover triggers A/B in the transmitting eNB, and may also be the parameter settings of the handover triggers A/B in the receiving eNB recommended by the transmitting eNB to the receiving eNB, or may include all of these parameter settings, as described in Embodiment 1.

If the receiving eNB finds through the judgment in step 401 that the parameter settings of the handover triggers A and B cannot be accepted, that is, the parameter change of the handover triggers A and B fails, the receiving eNB will feed a failure message of mobility change back to the transmitting eNB, the failure message of mobility change including the identification of the handover triggers A and B.

If the receiving eNB finds through the judgment in step 401 that the parameter settings of the handover trigger A can only be accepted and the parameter settings of the handover trigger B cannot be accepted, that is, the parameter change of the handover trigger B fails, the receiving eNB will feed a failure message of mobility change back to the transmitting eNB, the failure message of mobility change including the identification of the handover trigger B.

If the receiving eNB finds through the judgment in step 401 that the parameter change of the handover trigger B can only be accepted and the parameter change of the handover trigger A cannot be accepted, that is, the parameter change of the handover trigger A fails, the receiving eNB will feed a failure message of mobility change back to the transmitting eNB, the failure message of mobility change including the identification of the handover trigger A.

In this embodiment, if the receiving eNB can accept the parameter settings of all the handover triggers, the receiving eNB will feed an acknowledgement message of mobility change back to the transmitting eNB, as shown in Fig. 2a. The contents of the acknowledgement message of mobility change may be identical to those in existing means, which shall not be described herein any further.

In an embodiment, the request message for mobility change further includes parameter change reason of the at least one handover trigger, etc, as described in Embodiment 1. Such information may be taken as auxiliary information for the receiving eNB in performing judgment in step 401, and a concrete method of judgment may be carried out by existing means, which shall not be described herein any further.

In this embodiment, the parameter settings (the parameter settings in the transmitting eNB, and/or the recommended parameter settings in the receiving eNB, etc.) of the at least one handover trigger may be relative values, and may also be absolute values, as described in Embodiment 1, description of which being omitted herein.

In this embodiment, the identification of the at least one handover trigger may be identification of handover triggers in the transmitting eNB, may also be identification of handover triggers in the receiving eNB, and may further be identification of handover triggers in the transmitting eNB and in the receiving eNB, respectively, as described in Embodiment 1, description of which being omitted herein.

In an embodiment, the failure message of mobility change may further include failure reason of a handover trigger failing in parameter change. Still taking the above description as an example, when the parameter change of the handover trigger A fails, besides the identification of the handover trigger A, the parameter change failure reasons of the handover trigger A is also included in the failure message of mobility change.

In an embodiment, the failure message of mobility change may further include an acceptable range of parameter change of the handover trigger failing in parameter change. Still taking the above description as an example, when the parameter change of the handover trigger A fails, besides the identification of the handover trigger A and the parameter change failure reasons of the handover trigger A, the acceptable range of parameter change of the handover trigger A may also be fed back.

According to the method of the embodiment of the present invention, in transmitting a request message for mobility change by a transmitting eNB for negotiating mobility settings to a receiving eNB, identification of handover triggers (one or more) needing to negotiate mobility settings is added; and after receiving the request message for mobility change, the receiving eNB may determine which handover trigger or handover triggers need to negotiate mobility settings according to the identification of the handover triggers, determine whether the mobility settings negotiation of the at least one handover trigger can be completed (that is, whether the parameter change of the one or more handover triggers can be accepted) according to information on the parameter settings of the handover triggers corresponding to the identification of the at least one handover trigger included in the request message for mobility change, and feed a corresponding acknowledgement message of mobility change or failure message of mobility change back to the transmitting eNB, thereby achieving inter-eNB load balance and optimization of handover performance.

An embodiment of the present invention further provides a transmitting eNB for negotiating mobility settings, as described in Embodiment 3 below. As the principle of the transmitting eNB for solving problems is similar to that of the method of Embodiment 1, the implementation of the method of Embodiment 1 may be referred to for the implementation of the transmitting eNB, and the repeated parts shall not be described any further.

### Embodiment 3

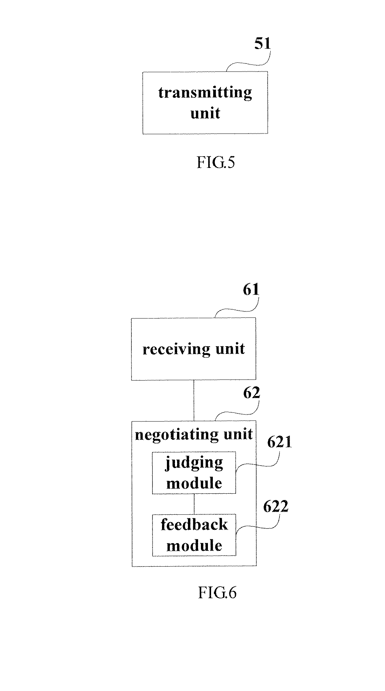

An embodiment of the present invention further provides a transmitting eNB for negotiating mobility settings. Fig. 5 is a schematic diagram of the structure of the eNB. As shown in Fig. 5, the eNB includes:
a transmitting unit 51 configured to transmit a request message for mobility change to a receiving eNB, the request message for mobility change including identification of at least one handover trigger, so that the receiving eNB negotiates mobility settings with respect to the at least one handover trigger with the transmitting eNB according to the identification of the at least one handover trigger.

In this embodiment, the identification of the at least one handover trigger is identification of the at least one handover trigger in the transmitting eNB, or identification of the at least one handover trigger in the receiving eNB, or identification of the at least one handover trigger in the transmitting eNB and in the receiving eNB, respectively.

In this embodiment, the identification of the handover trigger is used to indicate a type of the handover trigger, the type of the handover trigger including:
a handover trigger for cell range extension area;
a handover trigger for non-cell range extension area;
a handover trigger for high-speed/medium-speed/low-speed user; and
a handover trigger for high service quality user.

In this embodiment, the request message for mobility change may further include: parameter settings of each handover trigger corresponding to the identification of the at least one handover trigger. The parameter settings of each handover trigger here may be parameter settings of the handover trigger in the transmitting eNB, and may also be parameter settings of the handover trigger in the receiving eNB recommended by the transmitting eNB to the receiving eNB; and may also include the parameter settings of the handover trigger in the transmitting eNB and the parameter settings of the handover trigger in the receiving eNB recommended by the transmitting eNB to the receiving eNB.

Wherein, the parameter settings of the handover trigger in the transmitting eNB are absolute values or relative values, and the parameter settings of the handover trigger in the receiving eNB recommended by the transmitting eNB to the receiving eNB are absolute values or relative values.

In this embodiment, the request message for mobility change may further include: parameter change reason of each handover trigger corresponding to the identification of the at least one handover trigger.

In this embodiment, if the parameter change reasons of each handover trigger corresponding to the at least one handover trigger are identical, the request message for mobility change includes only one parameter change reason.

With the transmitting eNB for negotiating mobility settings of the embodiment of the present invention, inter-eNB load balance and optimization of handover performance may be achieved.

An embodiment of the present invention further provides a receiving eNB for negotiating mobility settings, as described in Embodiment 4 below. As the principle of the receiving eNB for solving problems is similar to that of the method of Embodiment 2, the implementation of the method of Embodiment 2 may be referred to for the implementation of the receiving eNB, and the repeated parts shall not be described any further.

### Embodiment 4

An embodiment of the present invention further provides a receiving eNB for negotiating mobility settings. Fig. 6 is a schematic diagram of the structure of the eNB. As shown in Fig. 6, the eNB includes:
a receiving unit 61 configured to receive a request message for mobility change transmitted by a transmitting eNB, the request message for mobility change including identification of at least one handover trigger; and
a negotiating unit 62 configured to negotiate mobility settings with respect to the at least one handover trigger with the transmitting eNB according to the identification of the at least one handover trigger.

In an embodiment, the request message for mobility change further includes parameter settings of each handover trigger corresponding to the identification of the at least one handover trigger, and the negotiating unit 62 includes:
a judging module 621 configured to judge according to the parameter settings of each handover trigger, whether a process of negotiating mobility settings of each handover trigger corresponding to the identification of the at least one handover trigger can be completed; and
a feedback module 622 configured to feed an acknowledgement message of mobility change back to the transmitting eNB when it is judged by the judging module 621 that the process of negotiating mobility settings of each handover trigger corresponding to the identification of the at least one handover trigger can be completed, or feed a failure message of mobility change back to the transmitting eNB when it is judged by the judging module 621 that the process of negotiating mobility settings of each handover trigger corresponding to the identification of the at least one handover trigger cannot be completed.

Wherein, when the parameter settings of each handover trigger cannot be accepted, or a part of the parameter settings of the handover triggers can be accepted, the judging module 621 judges that the process of negotiating mobility settings of each handover trigger corresponding to the identification of the at least one handover trigger cannot be completed.

In this embodiment, the failure message of mobility change includes identification of the handover trigger (the handover trigger which cannot accept the parameter settings) failing in parameter change.

In an embodiment, the failure message of mobility change may further include failure reason of the handover trigger failing in parameter change.

In an embodiment, the failure message of mobility change may further include an acceptable range of parameter change of the handover trigger failing in parameter change.

With the receiving eNB for negotiating mobility settings of the embodiment of the present invention, inter-eNB load balance and optimization of handover performance may be achieved.

An embodiment of the present invention further provides a computer-readable program, wherein when the program is executed in an eNB, the program enables a computer to carry out the method for negotiating mobility settings as described in Embodiment 1 or 2 in the eNB.

An embodiment of the present invention further provides a storage medium in which a computer-readable program is stored, wherein the computer-readable program enables a computer to carry out the method for negotiating mobility settings as described in Embodiment 1 or 2 in an eNB.

The above apparatus and method of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for negotiating mobility settings, comprising:
transmitting a request message for mobility change by a transmitting eNB for negotiating mobility settings to a receiving eNB, the request message for mobility change including identification of at least one handover trigger, so that the receiving eNB negotiates mobility settings with respect to the at least one handover trigger with the transmitting eNB according to the identification of the at least one handover trigger.

2. The method according to claim 1, wherein the identification of the at least one handover trigger is identification of the at least one handover trigger in the transmitting eNB, or identification of the at least one handover trigger in the receiving eNB, or identification of the at least one handover trigger in the transmitting eNB and in the receiving eNB, respectively.

3. The method according to claim 1 or 2, wherein the identification of the handover trigger is used to indicate a type of a handover trigger needing to negotiate mobility settings, the type of the handover trigger including:
a handover trigger for cell range extension area;
a handover trigger for non-cell range extension area;
a handover trigger for high-speed/medium-speed/low-speed user; and
a handover trigger for high service quality user.

4. The method according to claim 1, wherein the request message for mobility change further includes: parameter settings of each handover trigger corresponding to the identification of the at least one handover trigger.

5. The method according to claim 4, wherein the parameter settings of each handover trigger are:
parameter settings of the handover trigger in the transmitting eNB; and/or
parameter settings of the handover trigger in the receiving eNB recommended by the transmitting eNB to the receiving eNB.

6. The method according to claim 5, wherein the parameter settings of the handover trigger in the transmitting eNB are absolute values or relative values, and the parameter settings of the handover trigger in the receiving eNB recommended by the transmitting eNB to the receiving eNB are absolute values or relative values.

7. The method according to claim 1, wherein the request message for mobility change further includes: parameter change reason of each handover trigger corresponding to the identification of the at least one handover trigger.

8. The method according to claim 7, wherein if the parameter change reasons of each handover trigger corresponding to the identification of the at least one handover trigger are identical, the request message for mobility change includes only one parameter change reason.

9. A method for negotiating mobility settings, comprising:
receiving, by a receiving eNB for negotiating mobility settings, a request message for mobility change transmitted by a transmitting eNB, the request message for mobility change including identification of at least one handover trigger; and
negotiating mobility settings with respect to the at least one handover trigger by the receiving eNB with the transmitting eNB according to the identification of the at least one handover trigger.

10. The method according to claim 9, wherein the request message for mobility change further includes parameter settings of each handover trigger corresponding to the identification of the at least one handover trigger;
the receiving eNB determines, according to the parameter settings, whether a process of negotiating mobility settings of all the handover triggers corresponding to the identification of the at least one handover trigger can be completed;
and if the receiving eNB cannot complete the process of negotiating mobility settings, the receiving eNB feeds a failure message of mobility change back to the transmitting eNB, the failure message of mobility change including identification of a handover trigger failing in parameter change.

11. The method according to claim 10, wherein the step of determining whether the process of negotiating mobility settings of all the handover triggers corresponding to the identification of the at least one handover trigger can be completed comprises:
judging whether parameter settings of each handover trigger can be accepted;
determining that the process of negotiating mobility settings can be completed, if the parameter settings of each handover trigger can be accepted; and
determining that the process of negotiating mobility settings cannot be completed, if the parameter settings of each handover trigger cannot be accepted, or only a part of the parameter settings of the handover triggers can be accepted.

12. The method according to claim 10, wherein the failure message of mobility change further includes failure reason of the handover trigger failing in parameter change.

13. The method according to any one of claims 10-12, wherein the failure message of mobility change further includes an acceptable range of parameter change of the handover trigger failing in parameter change.

14. A transmitting eNB for negotiating mobility settings, comprising:
a transmitting unit configured to transmit a request message for mobility change to a receiving eNB, the request message for mobility change including identification of at least one handover trigger, so that the receiving eNB negotiates mobility settings with respect to the at least one handover trigger with the transmitting eNB according to the identification of the at least one handover trigger.

15. The eNB according to claim 14, wherein the identification of the at least one handover trigger is identification of the at least one handover trigger in the transmitting eNB, or identification of the at least one handover trigger in the receiving eNB, or identification of the at least one handover trigger in the transmitting eNB and in the receiving eNB, respectively.

16. The eNB according to claim 14 or 15, wherein the identification of the handover trigger is used to indicate a type of a handover trigger needing to negotiate mobility settings, the type of the handover trigger including:
a handover trigger for cell range extension area;
a handover trigger for non-cell range extension area;
a handover trigger for high-speed/medium-speed/low-speed user; and
a handover trigger for high service quality user.

17. The eNB according to claim 14, wherein the request message for mobility change further includes: parameter settings of each handover trigger corresponding to the identification of the at least one handover trigger.

18. The eNB according to claim 17, wherein the parameter settings of each handover trigger are:
parameter settings of the handover trigger in the transmitting eNB; and/or
parameter settings of the handover trigger in the receiving eNB recommended by the transmitting eNB to the receiving eNB.

19. The eNB according to claim 18, wherein the parameter settings of the handover trigger in the transmitting eNB are absolute values or relative values, and the parameter settings of the handover trigger in the receiving eNB recommended by the transmitting eNB to the receiving eNB are absolute values or relative values.

20. The eNB according to claim 14, wherein the request message for mobility change further includes: parameter change reason of each handover trigger corresponding to the identification of the at least one handover trigger.

21. The eNB according to claim 20, wherein if the parameter change reasons of each handover trigger corresponding to the identification of the at least one handover trigger are identical, the request message for mobility change includes only one parameter change reason.

22. A receiving eNB for negotiating mobility settings, comprising:
a receiving unit configured to receive a request message for mobility change transmitted by a transmitting eNB, the request message for mobility change including identification of at least one handover trigger; and
a negotiating unit configured to negotiate mobility settings with respect to the at least one handover trigger with the transmitting eNB according to the identification of the at least one handover trigger.

23. The eNB according to claim 22, wherein the request message for mobility change further includes parameter settings of each handover trigger corresponding to the identification of the at least one handover trigger, and the negotiating unit comprises:
a judging module configured to determine according to the parameter settings, whether a process of negotiating mobility settings of each handover trigger corresponding to the identification of the at least one handover trigger can be completed; and
a feedback module configured to feed a failure message of mobility change back to the transmitting eNB when it is judged by the judging module that the process of negotiating mobility settings cannot be completed, the failure message of mobility change including identification of a handover trigger failing in parameter change.

24. The eNB according to claim 23, wherein the judging module is configured to judge whether parameter settings of each handover trigger corresponding to the identification of the at least one handover trigger can be accepted;
and it is judged that the process of negotiating mobility settings cannot be completed, if the parameter settings of each handover trigger cannot be accepted, or only a part of the parameter settings of the handover triggers can be accepted.

25. The eNB according to claim 23, wherein the failure message of mobility change further includes failure reason of the handover trigger failing in parameter change.

26. The eNB according to any one of claims 23-25, wherein the failure message of mobility change further includes an acceptable range of parameter change of the handover trigger failing in parameter change.

27. A computer-readable program, wherein when the program is executed in an eNB, the program enables a computer to carry out the method for negotiating mobility settings as claimed in any one of claims 1-13 in the eNB.

28. A storage medium in which a computer-readable program is stored, wherein the computer-readable program enables a computer to carry out the method for negotiating for mobility settings as claimed in any one of claims 1-13 in an eNB.
